# FASCICULE DE BREVET EUROPEEN

(11) **EP 0 402 827 B1**
(45) Date de publication et mention de la délivrance du brevet: **12.04.1995**
(21) Numéro de dépôt: 90110995.9
(22) Date de dépôt: 11.06.1990
(51) Int. Cl.: H01J 43/30, H01J 49/02

(54) **Dispositif de traitement du signal reçu par un multiplicateur d'électrons**
Einrichtung zur Verarbeitung eines durch einen Elektronenvervielfacher empfangenen Signals
Device for signal treatment received by an electron multiplier

(30) Priorité: 16.06.1989 FR 8908047
(43) Date de publication de la demande: 19.12.1990
(73) Titulaire: ALCATEL CIT, 75008 Paris (FR)
(72) Inventeur: Baret, Gilles, F-74000 Annecy (FR)
(74) Mandataire: Weinmiller, Jürgen

(56) Documents cités:
- US-A- 3 247 373
- US-A- 3 666 957
- REVIEW OF SCIENTIFIC INSTRUMENTS, vol. 51, no. 11, novembre 1980, pages 1500-1503, American Institute of Physics, New York, US; H. HAYASHI et al.: "Dual- variable detection method providing a wider dynamic range to a photomultiplier"

## Description

La présente invention a pour objet un dispositif de traitement du signal reçu par un multiplicateur d'électrons.

Les multiplicateurs d'électrons sont des composants qui ont une fonction d'amplification. Leur gain généralement très important, peut aller jusqu'à 10⁴ ou 10⁵ . Ils sont utilisés dans des applications diverses où l'on traite des signaux très faibles. On citera, entre autres, la mesure d'énergie lumineuse (photomultiplicateurs) dans le visible ou l'invisible, les intensificateurs d'image, la mesure de rayonnement nucléaire (chambres à ionisation), la spectrométrie de masse et en particulier la détection de fuite à l'hélium.

Dans ces applications, les signaux à traiter présentent dans certains cas une dynamique de l'ordre de 10⁸ . Il est donc nécessaire d'avoir une chaîne de mesure qui comprend le multiplicateur d'électrons, et un amplificateur compresseur de signal. Cet élément ne peut pas, à lui seul, réduire suffisamment la dynamique de sortie. Il est alors nécessaire d'intervenir sur le gain du multiplicateur d'électrons pour réaliser une compression supplémentaire. Cela est obtenu par action sur sa tension d'alimentation. Dans des dispositifs connus, le gain de la chaîne de mesure, notamment par action sur ladite tension d'alimentation est commandé de manière discontinue, soit manuellement par l'emploi d'un commutateur soit dans des systèmes plus évolués, par commutation électronique automatique ou par des chaînes de mesure multiples. Cette discontinuité dans les fonctions de transfert engendre des effets indésirables tels que des temps de réponse importants ou des instabilités lorsque le signal est à la limite de deux gammes d'amplification, ou des raccordements de courbes incorrects.

La présente invention a donc pour but un dispositif perfectionné de traitement du signal reçu par un multiplicateur d'électrons qui pallie ces inconvénients.

L'invention a ainsi pour objet un dispositif de traitement du signal reçu par un multiplicateur d'électrons, permettant une mesure continue dudit signal sur une grande dynamique en utilisant une seule méthode de traitement, comportant ledit multiplicateur d'électrons ayant un gain variant exponentiellement en fonction de sa tension d'alimentation et recevant le signal d'entrée, comprenant une alimentation haute tension dudit multiplicateur commandée par un amplificateur linéaire à pente négative dont les paramètres gain et référence définissent la plage de mesure, ledit amplificateur linéaire recevant en entrée la sortie d'un amplificateur compresseur logarithmique, agissant sur l'amplificateur linéaire faisant ainsi varier le gain du multiplicateur d'électrons de façon continue sur toute la dynamique de mesure en fonction du signal de sortie dudit multiplicateur d'électrons, reçu sur un collecteur d'électrons, la sortie dudit amplificateur logarithmique constituant le signal de sortie du dispositif.

Dans un mode de réalisation de l'invention, le multiplicateur d'électrons est une galette à microcanaux.

L'invention trouvera application, notamment, dans la spectrométrie de masse et particulièrement dans la détection de fuite d'hélium.

Les différents objets et caractéristiques de l'invention apparaîtront de manière plus précise dans un exemple de réalisation, donné à titre non limitatif, illustré par les figures annexées qui représentent :
- la figure 1, un multiplicateur d'électrons connu du type "galette à microcanaux",
- la figure 2, une coupe partielle de la galette à microcanaux représentée dans la figure 1,
- la figure 3, un diagramme du dispositif de traitement du signal selon l'invention.

Les éléments représentés dans différentes figures seront affectés d'une seule référence.

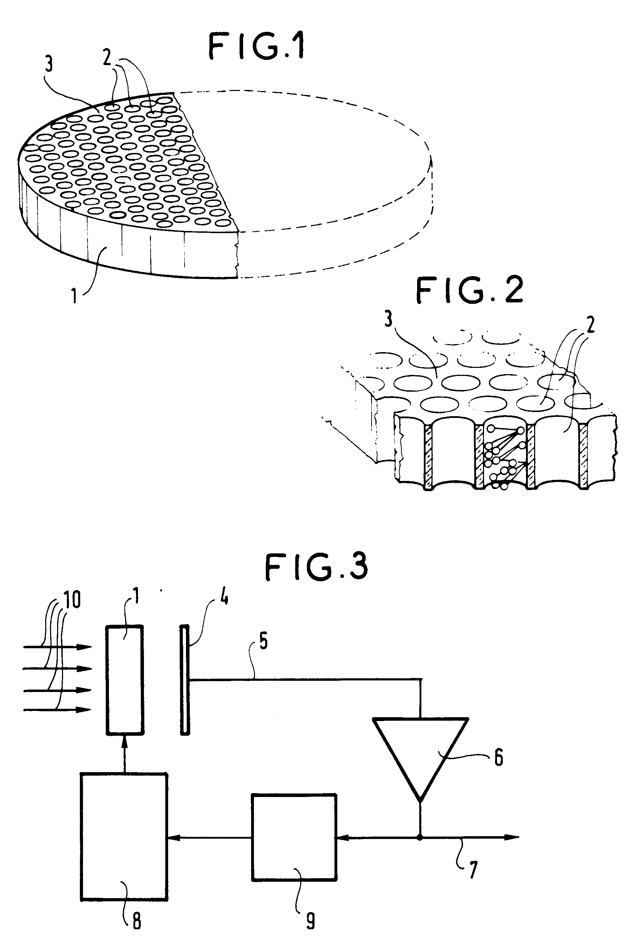

La galette à microcanaux 1 représentée dans les figures 1 et 2 transforme un flux de particules ou de photons en un flux d'électrons incidents et agit sur ce flux d'électrons incidents comme un multiplicateur d'électrons. Elle peut donc être aisément remplacée par un ensemble constitué d'une cellule de conversion de flux de particules ou de photons en un flux d'électrons incidents, suivi d'un multiplicateur d'électrons à dynodes.

La galette à microcanaux comprend une multitude de canaux 2 disposés approximativement dans l'axe du flux incident. Chaque canal est un multiplicateur d'électrons élémentaire.

Il est revêtu d'une couche à grande résistivité dont le coefficient d'émission secondaire est supérieur à l'unité. Une haute tension est appliquée entre ces deux extrémités. Ainsi, un électron incident par chocs successifs et progression dans le microcanal génère à la sortie de la galette un nombre d'électrons important. Ce nombre d'électrons correspond à un gain. L'ensemble des canaux est connecté électriquement par le revêtement d'une couche métallique 3 sur chacune des deux faces planes de la galette. La haute tension appliquée sur la galette est généralement comprise entre 400 et 1 500 volts. C'est elle qui détermine le gain du multiplicateur d'électrons.

Le dispositif selon l'invention sera maintenant explicité en se reportant à la figure 3. Le multiplicateur d'électrons 1 tel qu'une galette à microcanaux recevant le flux de particules 10, est suivi d'un collecteur d'électrons 4 qui produit un courant électronique 5. Ce courant est injecté sur un amplificateur compresseur 6 qui amplifie le signal et en effectue une compression de manière à en réduire la dynamique. Le signal de sortie 7 de cet amplificateur compresseur sera ensuite exploité, notamment à des fins d'affichage. Avantageusement, l'amplificateur compresseur comprendra un amplificateur logarithmique qui assure effectivement une fonction de compression.

L'alimentation haute tension 8 du multiplicateur d'électrons est modulée par un circuit de commande 9 recevant le signal de sortie 7. Cette alimentation produit une tension qui est fonction du signal appliqué sur son entrée de commande, cette tension étant maximale quand le courant électronique 5 est minimal ou nul, et minimal lorsque le courant électronique est maximal. Il en résulte une compression supplémentaire de la dynamique de la chaîne de mesure. L'amplificateur compresseur 6 étant un amplificateur logarithmique, le circuit de commande 9 de l'alimentation du multiplicateur est un amplificateur linéaire tel que la haute tension produite par l'alimentation soit une fonction linéaire du signal de sortie 7 de pente négative variant entre deux limites. Dans ce cas, en utilisant une galette à microcanaux dont le gain est une fonction exponentielle de la haute tension qui lui est appliquée, le signal de sortie 7 est une fonction logarithmique du flux de particules incidentes.

Il est possible évidemment, d'imaginer d'autres types de rétroaction sans pour autant sortir du cadre de l'invention. L'élément essentiel est que la fonction de transfert du dispositif (rapport entre la valeur du signal de sortie 7 et le flux d'électrons incidents) soit une relation connue et sans ambiguité entre la sortie et l'entrée du dispositif de manière à être exploitée.

Le dispositif ainsi réalisé permet donc de traiter un signal d'entrée à forte dynamique.

Le dispositif de traitement du signal selon l'invention trouvera application notamment dans un domaine particulier de la spectrométrie de masse qui concerne la détection de fuite à l'hélium. Il s'agit de mesurer la pression partielle d'hélium contenue dans l'atmosphère résiduelle d'une enceinte dont on désire vérifier l'étanchéité. Deux cas se présentent couramment. Si l'enceinte est d'un volume important, on utilise une pompe pour y faire le vide, on crée une atmosphère environnant cette enceinte enrichie d'hélium, gaz témoin, et on analyse le gaz pompé en vérifiant s'il est lui aussi, enrichi en hélium. Si l'enceinte est petite, un boîtier par exemple, on commence par mettre ce boîtier en surpression d'hélium dans une chambre, puis on la dispose dans une deuxième chambre où on fait le vide. On analyse le gaz pompé de la même manière pour vérifier s'il est enrichi en hélium.

Un détecteur de fuite comporte donc un spectromètre de masse qui comprend un filtre dont le but est de dévier spatialement les molécules de gaz préalablement ionisées en fonction de leur rapport m/q, où m est la masse de la molécule et q sa charge. Le spectromètre est calé sur le pic d'hélium. A la sortie de ce filtre spatial est disposé une cellule qui convertit les ions d'hélium incidents en électrons. Les électrons sont ensuite multipliés dans un multiplicateur d'électrons pour créer un courant électronique 5.

Dans l'exemple considéré la cellule de conversion fait partie intégrante du multiplicateur d'électrons qui est une galette à microcanaux. Le dispositif de traitement du signal selon l'invention permet ainsi de convertir un flux incident d'ions hélium ayant une dynamique de 10⁸ (variant approximativement entre 10⁻¹⁶ et 10⁻⁸ ampère) en un courant électronique et d'amplifier ce courant électronique pour produire un signal de sortie 7, notamment destiné à un système d'affichage.

L'application du dispositif à un détecteur de fuite à l'hélium sera aisément transposable à tout autre domaine utilisant un multiplicateur d'électrons, en remplaçant uniquement la cellule de conversion, cette cellule ayant pour objet la conversion d'un flux de particules ou de photons en un flux d'électrons.

## Revendications

1. Dispositif de traitement du signal (10) reçu par un multiplicateur d'électrons (1), permettant une mesure continue dudit signal sur une grande dynamique en utilisant une seule méthode de traitement, comportant ledit multiplicateur d'électrons (1) ayant un gain variant exponentiellement en fonction de sa tension d'alimentation et recevant le signal d'entrée (10), comprenant une alimentation haute tension (8) dudit multiplicateur (1) commandée par un amplificateur linéaire (9) à pente négative dont les paramètres gain et référence définissent la plage de mesure, ledit amplificateur linéaire (9) recevant en entrée la sortie d'un amplificateur compresseur logarithmique (6), agissant sur l'amplificateur linéaire (9) faisant ainsi varier le gain du multiplicateur d'électrons de façon continue sur toute la dynamique de mesure en fonction du signal de sortie (5) dudit multiplicateur d'électrons, reçu sur un collecteur d'électrons (4), la sortie (7) dudit amplificateur logarithmique (6) constituant le signal de sortie du dispositif.

2. Dispositif de traitement du signal selon la revendication 1, caractérisé en ce que le multiplicateur d'électrons est une galette à microcanaux.

3. Application du dispositif de traitement du signal reçu par un multiplicateur d'électrons selon l'une des revendications 1 ou 2 à la spectrométrie de masse.

4. Application du dispositif de traitement du signal reçu par un multiplicateur d'électrons selon l'une quelconque des revendications 1 à 3 à la détection de fuites, utilisant l'hélium comme gaz témoin.

## Patentansprüche

1. Vorrichtung zur Verarbeitung des von einem Elektronenvervielfacher (1) empfangenen Signals (10), die eine kontinuierliche Messung dieses Signals in einem großen Dynamikbereich unter Verwendung nur einer Verarbeitungsmethode erlaubt, wobei der Elektronenvervielfacher (1) einen abhängig von der Speisespannung exponential variablen Verstärkungsgrad besitzt und das Eingangssignal (10) empfängt, wobei die Vorrichtung eine Hochspannungsspeisung (8) für den Vervielfacher (1) enthält, die von einem linearen Verstärker (9) mit negativer Kennlinie gesteuert wird, wobei die Parameter des Verstärkungsgrads und der Bezugsgröße den Meßbereich definieren, wobei der lineare Verstärker (9) eingangsseitig das Ausgangssignal eines logarithmischen Kompressorverstärkers (6) empfängt, der auf den linearen Verstärker (9) einwirkt und so den Verstärkungsgrad des Elektronenvervielfachers kontinuierlich über den ganzen Meßdynamikbereich abhängig vom in einem Elektronenkollektor (4) empfangenen Ausgangssignal (5) des Elektronenvervielfachers variiert, wobei der Ausgang (7) des logarithmischen Verstärkers (6) das Ausgangssignal der Vorrichtung bildet.

2. Vorrichtung zur Verarbeitung des Signals nach Anspruch 1, dadurch gekennzeichnet, daß der Elektronenvervielfacher eine Scheibe mit Mikrokanälen ist.

3. Anwendung der Vorrichtung zur Verarbeitung des von einem Elektronenvervielfacher empfangenen Signals nach einem der Ansprüche 1 oder 2 auf die Massenspektrometrie.

4. Anwendung der Vorrichtung zur Verarbeitung des von einem Elektronenvervielfacher empfangenen Signals nach einem beliebigen der Ansprüche 1 bis 3 auf die Lecksuche, bei der Helium als Testgas verwendet wird.

## Claims

1. A circuit for processing the signal (10) received by an electron multiplier (1), enabling said signal to be measured continuously over a large dynamic range while using a single method of processing, the circuit including said electronic multiplier (1) having gain that varies exponentially as a function of its power supply voltage and receiving the input signal (10), and including a high tension power supply (8) for said multiplier (1) controlled by a linear amplifier (9) having a negative slope whose gain and reference parameters define the measurement range, said linear amplifier (9) receiving as its input the output of a logarithmic gain-compressing amplifier (6), and acting on the linear amplifier (9) thus varying the gain of the electron multiplier continuously over the entire measurement dynamic range as a function of the output signal (5) from said electron multiplier, as received by an electron collector (4), the output (7) of said logarithmic amplifier (6) constituting the output signal of the circuit.

2. A signal processing circuit according to claim 1, characterized in that the electron multiplier is a microchannel plate.

3. Application of the circuit for processing a signal received by an electron multiplier according to claim 1 or 2 to mass spectrometry.

4. Application of the circuit for processing the signal received by an electron multiplier according to any one of claims 1 to 3, for detecting leaks by using helium as a marker gas.
